## Europäisches Patentamt
## European Patent Office
## Office européen des brevets

(19)

(11) Veröffentlichungsnummer: **0 058 210**
**B1**

(12)

# EUROPÄISCHE PATENTSCHRIFT

(45) Veröffentlichungstag der Patentschrift:
**05.12.84**

(21) Anmeldenummer: **81101010.7**

(22) Anmeldetag: **13.02.81**

(51) Int. Cl.³: **C 09 D 5/30**

(54) **Tarnbeschichtung mit Breitbandwirkung.**

(43) Veröffentlichungstag der Anmeldung:
**25.08.82 Patentblatt 82/34**

(45) Bekanntmachung des Hinweises auf die Patenterteilung:
**05.12.84 Patentblatt 84/49**

(84) Benannte Vertragsstaaten:
**AT CH LI SE**

(56) Entgegenhaltungen:
**DE - C - 725 253**
**FR - A - 1 166 219**

(73) Patentinhaber: **Pusch, Günter, Dr.-Ing., Bannholzweg 12, D-6903 Neckargemünd (DE)**

(72) Erfinder: **Pusch, Günter, Dr.-Ing., Bannholzweg 12, D-6903 Neckargemünd (DE)**

(74) Vertreter: **Paul, Dieter-Alfred, Dipl.-Ing., Erftstrasse 82, D-4040 Neuss 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Tarnbeschichtung mit Breitbandwirkung im sichtbaren Spektralbereich sowie im IR-Spektralbereich und/oder im Radarspektralbereich, bestehend wenigstens aus einer Grundierung und einer darauf aufgebrachten Tarnfarbe, deren Pigmente im sichtbaren und nahen Spektralbereich eine dem natürlichen Hintergrund, beispielsweise dem Chlorophyll, ähnliche Reflexion aufweisen.

Die bekannten Tarnbeschichtungen bieten im sichtbaren und nahen IR-Spektralbereich aufgrund der farblichen Anpassung an den Hintergrund einen guten Schutz. Zur Aufklärung werden jedoch mittlerweile vielfach Wärmebildgeräte oder IR-Zeilenabtastverfahren verwendet. Diese arbeiten im fernen IR-Bereich, nämlich in den atmosphärischen Fenstern II = 3 bis 5 $\mu$m und III = 8 bis 14 $\mu$m, da in dem übrigen IR-Spektralbereich die Atmosphäre auf grössere Entfernung undurchlässig ist. Die heute verwendeten Tarnfarben haben jedoch im IR-Spektralbereich einen Emissionskoeffizienten von etwa 95%, und zwar unabhängig von ihren sichtoptischen Farben. Dieser Emissionskoeffizient liegt in den meisten Fällen höher als die Emissionskoeffizienten des natürlichen Hintergrundes. Entsprechend heben sich die bekannten Tarnfarben im fernen IR-Spektralbereich vom Hintergrund ab, was in den Fenstern II und III von den Wärmebildgeräten klar erfasst werden kann.

Daneben besteht das Bedürfnis, eine Tarnbeschichtung zu schaffen, die Schutz auch gegen Radaraufklärung bietet. Hierzu ist aus der DE-PS 2 151 349 eine Radarplane bekannt, auf der bei einer Ausführungsform eine Metallisierung aufgebracht ist, die durch eine im sichtoptischen Spektralbereich wirksame Tarnfarbe abgedeckt ist. Die Metallisierung ist bewusst so ausgeführt, dass Poren und Löcher entstehen, so dass ein wirksamer Flächenwiderstand im Radarbereich erreicht wird, der zwischen 130 und 310 oder zwischen 460 und 1 100 Ohm liegt. Erzielt wird dabei eine Reflexion der Radarstrahlen im Bereich zwischen 10 bis 46%, wobei als günstiger Wert für eine Allzwecktarnung 30 bis 35% angesehen wird.

Der Nachteil dieser Tarnbeschichtung besteht in der sehr teuren Herstellung, denn es kommt, um die geforderten Werte zu erhalten, auf eine genaue Einhaltung der Toleranzen bei der Ausbildung, insbesondere der Metallisierung, an. Zudem ist die Tarnwirkung nicht optimal.

Der Erfindung liegt die Aufgabe zugrunde, eine Tarnbeschichtung zu schaffen, die sich gegenüber den bekannten Beschichtungen durch eine breitbandigere und bessere Wirksamkeit bei niedrigen Herstellungskosten auszeichnet.

Diese Aufgabe wird erfindungsgemäss dadurch gelöst, dass die Grundierung im Bereich der terrestrischen thermischen Strahlung reflektierend ausgebildet ist und die Tarnfarbe ein Bindemittel enthält, das in den Spektralbereichen der atmosphärischen Fenster II = 3 bis 5 $\mu$m und III = 8 bis 14 $\mu$m eine gute Transparenz aufweist.

Aufgrund dieser Ausbildung der Tarnbeschichtung wird eine breitbandigere Tarnwirkung bis in den thermischen IR-Spektralbereich erzielt. Dabei kann der Emissionskoeffizient entsprechend dem jeweiligen Hintergrund angepasst werden, ohne dass die Reflexionseigenschaften im sichtbaren und nahen IR-Bereich beeinträchtigt werden. Dies beruht auf der schon zur Erfindung gehörenden Erkenntnis, dass der Emissionskoeffizient einer Tarnfarbe weniger von den Pigmenten als vom Bindemittel bestimmt wird. Es wurde nämlich festgestellt, dass die Pigmente — mit Ausnahme Schwarz — zum Teil sehr niedrige Emissionskoeffizienten haben, während der Emissionskoeffizient der diese Pigmente enthaltenden Tarnfarbe unverändert hoch ist. Dies hat seine Ursache in den sehr hohen Emissionskoeffizienten der bekannten Binder im Fenster III und zum Teil auch im Fenster II, allerdings hier nicht so ausgeprägt und von Binder zu Binder verschieden. Werden metallische Gegenstände, wie beispielsweise Fahrzeuge, mit den bisherigen Tarnfarben angestrichen, so kann es bei bestimmten Binderarten vorkommen, dass die Gegenstände im Fenster II dunkler und im Fenster III heller als der natürliche Hintergrund erscheinen und somit für Wärmebildgeräte erkennbar sind.

Die Grundierung kann beispielsweise aus einer metallisch spiegelnden Farbe bestehen, wobei zweckmässigerweise für diese Farbe ebenfalls ein Binder guter Transparenz verwendet wird. Es besteht jedoch auch die Möglichkeit, die Grundierung mit einem metallischen Belag zu versehen, beispielsweise mit aufgedampftem Aluminium. Hierdurch lassen sich hohe Reflexionsgrade im gesamten IR-Spektralbereich erzielen.

Eine noch breitbandigere Tarnbeschichtung wird dadurch erreicht, dass die Grundierung einen homogenen metallischen Belag mit einem Flächenwiderstand im Radarbereich von wenigen Ohm aufweist und darauf die Tarnfarbe aufgebracht ist. Insbesondere, wenn diese Tarnbeschichtung für die aufgeschnittene Garnierung von Tarnnetzen verwendet wird, ergibt sich eine ausgezeichnete Schutzwirkung auch gegen Radaraufklärung. Diese Schutzwirkung beruht darauf, dass die Radarstrahlung fast vollständig abweisend reflektiert wird, also nicht mehr den Radarempfänger erreicht. Sie entspricht der Reflexion an Bäumen und Sträuchern, so dass ein mit einem solchen Tarnnetz umgebener Gegenstand von dem natürlichen Hintergrund weder mit Wärmebildgeräten noch mit Radaraufklärungsgeräten zu unterscheiden ist.

Selbstverständlich ist, wie der Fachmann unter anderem auch aus der DE-PS 2 151 349 weiss, die Tarnwirkung im Radarbereich nicht von der Durchlässigkeit der Tarnfarbe im thermischen IR-Spektralbereich abhängig. Ist deshalb eine Tarnwirkung nur im sichtoptischen und im Radar-Spektralbereich erwünscht, so kann auf ein in den atmosphärischen Fenstern II und III transparentes Bindemittel der Tarnfarbe verzichtet werden.

Mit einer Tarnbeschichtung versehene Gegenstände unterliegen häufig wechselnden Umgebungsbedingungen, insbesondere was die Art des Hintergrundes und die Temperatur der Gegenstände, des Hintergrundes und der auf sie einwirkenden Wärmestrahlung betrifft. Deshalb muss eine für bestimmte Umgebungsbedingungen optimale Tarnbeschichtung nicht auch in gleicher Weise für andere Umgebungsbedingungen gut sein. Um auch dann einen Schutz gegen Wärmebildgeräte zu gewährleisten, ist es zweckmässig, die Tarnbeschichtung hinsichtlich ihrer Emission und Remission in den Fenstern II und III zu strukturieren, was im sichtoptischen Bereich als Mimikryrung bekannt ist. Hierdurch wird die Kontur des getarnten Gegenstandes im thermischen Bereich derart zerrissen, dass dessen geometrische Konfiguration mit Wärmebildgeräten nicht mehr erkennbar ist. Im übrigen wird eine weitgehende Annäherung an einen thermisch ähnlich strukturierten Hintergrund erzielt, wie es beispielsweise Sträucher oder Bäume darstellen.

Die Strukturierung der erfindungsgemässen Tarnbeschichtung kann auf mehrfache Weise geschehen. Beispielsweise kann die Grundierung im langwelligen IR-Bereich (Fenster II und III) abwechselnd in Teilbereichen reflektierend und schwarz wirkend ausgebildet werden. Hierdurch ergeben sich Teilbereiche mit unterschiedlichen Emissionskoeffizienten. Dabei ist es zweckmässig, dass über die schwarz wirkenden Teilbereiche im sichtbaren Bereich schwarz oder olivgrün wirkende Tarnfarben und über die reflektierenden Teilbereiche im sichtbaren Bereich infrarotdurchlässige Tarnfarben, beispielsweise grün, braun oder hellgrau, aufgebracht werden. Auf diese Weise wird die Strukturierung der Grundierung nicht durch die Pigmentierung der Tarnfarbe wieder aufgehoben.

Eine Strukturierung kann auch dadurch erzielt werden, dass die Grundierung ganzflächig reflektierend ausgebildet ist und die Tarnfarbe in Teilbereichen verschiedenartig absorbierende und/oder streuende Pigmente enthält. Hier wird die Tatsache ausgenutzt, dass die bei Tarnfarben verwendeten Pigmente je nach sichtoptischer Farbe und je nach Teilchengrösse eine unterschiedliche Absorption und/oder Streuung haben.

Eine weitere Möglichkeit der Strukturierung besteht darin, die Grundierung ganzflächig reflektierend auszubilden und die Tarnfarbe in Teilbereichen mit unterschiedlicher Schichtstärke aufzutragen. Die Strukturierung beruht dann auf dem Effekt, dass der Emissionskoeffizient in den meisten Fällen von der Schichtdicke, d.h. der Zahl und Grösse der Pigmente, die in die Schicht eingebettet sind, bestimmt wird.

Selbstverständlich lassen sich die vorgenannten, verschiedenen Methoden zum Erhalt einer Strukturierung miteinander kombinieren, wodurch der Bereich der Anpassung der Strukturierung an den jeweiligen Hintergrund noch erweitert wird.

Nach einem weiteren Merkmal der Erfindung ist vorgesehen, dass das Bindemittel im Bereich von 5,5 bis 7,5 $\mu$m, also in dem Spektralbereich zwischen den atmosphärischen Fenstern II und III, eine hohe Absorption aufweist. Dies hat zur Folge, dass der mit dieser Tarnbeschichtung versehene Gegenstand seine von ihm entwickelten Wärmemengen in diesem Spektralbereich emittiert, was jedoch von den Wärmebildgeräten nicht erfasst werden kann, da die Atmosphäre hier auf grössere Entfernungen undurchlässig ist.

Die erfindungsgemässe Tarnbeschichtung kann beispielsweise bei Tarnnetzen, die sich in ihren sichtoptischen Eigenschaften von den bisherigen nicht unterscheiden, in der Weise angewendet werden, dass die Textilgarnierung des Tarnnetzes zuerst mit einer spiegelnden Grundierung oder einem metallischen Belag versehen wird, worauf dann die Tarnfarbe mit den oben erwähnten Eigenschaften aufgebracht wird. Derartige Tarnnetze weisen im Gegensatz zu den derzeit verwendeten auch in den atmosphärischen Fenstern II und III eine gute Tarnwirkung auf, insbesondere wenn die Tarnbeschichtung strukturiert wird.

Des weiteren können auch Wärmedämmatten zur Verminderung des Temperaturkontrastes an ihrer Aussenseite mit der erfindungsgemässen Tarnbeschichtung versehen werden, um eine entsprechende Tarnwirkung zu erzielen. Die Eigenschaft von Wärmedämmatten, sich bei Sonneneinstrahlung aufgrund ihrer hohen Wärmedämmwirkung wesentlich stärker als die natürliche Umgebung zu erwärmen und dadurch mit Hilfe von Wärmebildgeräten hell leuchtend erkannt zu werden, kann dadurch verhindert werden, dass die heissen Teile des zu tarnenden Gegenstandes durch Wärmedämmatten gekapselt werden und darüber ein mit der erfindungsgemässen Tarnbeschichtung versehenes Tarnnetz in einem die Luftkonvektion ermöglichenden Abstand gelegt wird. Dies hat zur Folge, dass der Wärmekontrast, d.h. der Kontrast der heissen Teile des zu tarnenden Gegenstandes, gegenüber dem natürlichen Hintergrund durch die Wärmedämmatten abgebaut wird und das darübergelegte Tarnnetz eine Aufheizung der Wärmedämmatten durch die Sonneneinstrahlung verhindern wird. Die in bekannter Weise sichelförmig geschnittene Garnierung des Tarnnetzes, versehen mit der erfindungsgemäss strukturierten Tarnbeschichtung, wird nämlich durch Sonneneinstrahlung wie die natürliche Belaubung erwärmt und durch Wind und/oder Luftkonvektion gekühlt. Dabei bewirkt die Schatteneinwirkung des Tarnnetzes auf die Wärmedämmatten, dass sich diese durch die Sonneneinstrahlung auf das Tarnnetz nicht anders als die natürliche Umgebung erwärmen können.

Die mittels der erfindungsgemässen Tarnbeschichtung erreichbare thermische Strukturierung des Tarnnetzes bewirkt, dass dessen Emissionskontrast nicht einheitlich, sondern örtlich verschieden ist. Damit werden die thermischen Strukturen des gesamten zu tarnenden Gegenstandes zerrissen, so dass die geometrische Konfiguration des Tarnnetzes durch Wärmebildgeräte nicht mehr erkennbar gemacht werden kann.

**Patentansprüche**

1. Tarnbeschichtung mit Breitbandwirkung vom sichtbaren Spektralbereich bis zumindest in den IR-Spektralbereich, bestehend wenigstens aus einer Grundierung und einer darauf aufgebrachten Tarnfarbe, deren Pigmente im sichtbaren und nahen IR-Spektralbereich eine dem natürlichen Hintergrund, beispielsweise dem Chlorophyll, ähnliche Reflektion aufweisen, dadurch gekennzeichnet, dass die Grundierung im Bereich der terrestischen thermischen Strahlung reflektierend ausgebildet ist und die Tarnfarbe ein Bindemittel enthält, das in den Spektralbereichen der atmosphärischen Fenster II = 3 bis 5 $\mu$m und III = 8 bis 14 $\mu$m eine gute Transparenz aufweist.

2. Tarnbeschichtung nach Anspruch 1, dadurch gekennzeichnet, dass die Grundierung aus einer metallisch spiegelnden Farbe besteht.

3. Tarnbeschichtung nach Anspruch 1, dadurch gekennzeichnet, dass die Grundierung einen metallischen Belag hat.

4. Tarnbeschichtung mit Breitbandwirkung zumindest im sichtbaren Spektralbereich und im Radar-Spektralbereich, bestehend wenigstens aus einer Grundierung und einer darauf aufgebrachten Tarnfarbe, deren Pigmente im sichtbaren und nahen IR-Spektralbereich eine dem natürlichen Hintergrund, beispielsweise dem Chlorophyll, ähnliche Reflektion aufweisen, insbesondere nach Anspruch 1, dadurch gekennzeichnet, dass die Grundierung einen homogenen metallischen Belag mit einem Flächenwiderstand im Radarbereich von wenigen Ohm aufweist und darauf die Tarnfarbe aufgebracht ist.

5. Verwendung der Tarnbeschichtung nach Anspruch 4 für die aufgeschnittene Garnierung von Tarnnetzen.

6. Tarnbeschichtung nach einem der Ansprüche 1 bis 5, dadurch gekennzeichnet, dass die Grundierung im langwelligen IR-Spektralbereich (Fenster II und III) abwechselnd in Teilbereichen reflektierend und schwarz wirkend ausgebildet ist.

7. Tarnbeschichtung nach Anspruch 6, dadurch gekennzeichnet, dass über die schwarz wirkenden Teilbereiche im sichtbaren Bereich schwarz oder olivgrün wirkende und über die reflektierenden Teilbereiche im sichtbaren Bereich infrarotdurchlässige Tarnfarben, beispielsweise grün, braun oder hellgrau, aufgebracht sind.

8. Tarnbeschichtung nach einem der Ansprüche 1 bis 5, dadurch gekennzeichnet, dass die Grundierung ganzflächig reflektierend ausgebildet ist und die Tarnfarbe in Teilbereichen verschiedenartig absorbierende und/oder streuende Pigmente enthält.

9. Tarnbeschichtung nach einem der Ansprüche 1 bis 5, dadurch gekennzeichnet, dass die Grundierung ganzflächig reflektierend ausgebildet und die Tarnfarbe in Teilbereichen mit unterschiedlicher Schichtstärke aufgetragen ist.

10. Tarnbeschichtung nach einem der Ansprüche 1 bis 5, dadurch gekennzeichnet, dass das Bindemittel der Tarnfarbe im Bereich von 5,5 bis 7,5 $\mu$m eine hohe Absorption aufweist.

## Claims

1. Camouflage coating with wide band effect from the visible spectral range to at least into the infrared spectral range, comprising at least a primer and a camouflage paint applied thereon, the pigments of which in the visible and near infrared spectral range have a reflection similar to the neutral background, for example to chlorophyll, characterised in that the primer is made to be reflecting in the terrestrial thermal radiation range, and the camouflage paint contains a binder which has a good transparency in the spectral ranges of the atmospheric windows II = 3 to 5 $\mu$m and III = 8 to 14 $\mu$m.

2. Camouflage coating according to claim 1, characterised in that the primer consists of a metallically reflecting paint.

3. Camouflage coating according to claim 1, characterised in that the primer is provided with a metallic covering.

4. Camouflage coating with wide band effect at least in the visible spectral range and in the radar spectral range, comprising at least a primer and a camouflage paint applied thereon, whose pigments in the visible and near infrared spectral range have a reflection similar to the natural background, for example to chlorophyll, especially according to claim 1, characterised in that the primer has a homogeneous metallic covering with a surface resistance in the radar range of a few ohms, and the camouflage paint is applied thereon.

5. Use of the camouflage coating according to claim 4 for fragmented garnishing of camouflage nets.

6. Camouflage coating according to one of claims 1 to 5, characterised in that the longwave infrared spectral range (windows II and III) the primer is made so as to have a black effect and to be reflecting alternately in part-regions.

7. Camouflage coating according to claim 6, characterised by application over the black-effect part-regions of camouflage paints having a black or olive-green effect in the visible range, and application over the reflecting part-regions of camouflage paints which are infrared-pervious, for example green, brown or light grey, in the visible range.

8. Camouflage coating according to one of claims 1 to 5, characterised in that the primer is made to be reflecting over its whole surface, and the camouflage paint comprises differently absorbing and/or dispersing pigments in part-regions.

9. Camouflage coating according to one of claims 1 to 5, characterised in that the primer is made to be reflecting at its entire surface, and the camouflage paint is applied with different layer thicknesses in part-regions.

10. Camouflage coating according to one of claims 1 to 5, characterised in that the binder of the camouflage paint has a high absorption in the range from 5.5 to 7.5 $\mu$m.

## Revendications

1. Revêtement de camouflage ayant un effet sur une bande large allant du domaine spectral visible jusqu'à au moins le domaine spectral infrarouge, constitué d'au moins une couche de fond et d'une peinture de camouflage déposée dessus, dont les pigments présentent, dans les domaines spectraux visible et infrarouge proche, une réflexion semblable à l'arrière plan naturel, par exemple au vert des feuilles, caractérisé en ce que la couche de base est réfléchissante dans le domaine du rayonnement thermique terrestre et la peinture contient un agent liant qui présente une bonne transparence dans les domaines spectraux des fenêtres atmosphériques II = 3 à 5 $\mu$m et III = 8 à 14 $\mu$m.

2. Revêtement de camouflage suivant la revendication 1, caractérisé en ce que la couche de base et en une peinture réfléchissante comme un métal.

3. Revêtement de camouflage suivant la revendication 1, caractérisé en ce que la couche de base a une couche métallique.

4. Revêtement de camouflage ayant un effet sur une bande large au moins dans le domaine spectral visible et dans le domaine spectral du radar, constitué d'au moins une couche de fond et d'une peinture de camouflage déposée dessus, dont les pigments présentent, dans les domaines spectraux visible et infrarouge proche, une réflexion semblable à l'arrière plan naturel, par exemple au vert des feuilles, notamment la revendication 1, caractérisé en ce que la couche de base présente une couche métallique homogène ayant une impédance superficielle dans le domaine du radar de quelques Ohm, et la peinture est déposée sur cette couche métallique.

5. Utilisation du revêtement de camouflage suivant la revendication 4, pour l'habillage à découpe de filet de camouflage.

6. Revêtement de camouflage suivant l'une des revendications 1 à 5, caractérisé en ce que la couche de base, dans le domaine spectral infrarouge à grandes longueurs d'ondes, (fenêtre II et III), est alternativement, suivant des régions partielles, réfléchissante et à effet de corps noir.

7. Revêtement de camouflage suivant la revendication 6, caractérisé en ce que sur les régions partielles à effet de corps noir sont déposées des peintures à effet noir ou vert olive dans le domaine visible et sur les régions partielles réfléchissantes des peintures par exemple vertes, brunes ou gris-jaunes, transparentes aux infrarouges dans le domaine visible.

8. Revêtement de camouflage suivant l'une des revendications 1 à 5, caractérisé en ce que la couche de base est réfléchissante sur toute la surface et la peinture contient, suivant des régions partielles, des pigments absorbants et/ou dispersants disparates.

9. Revêtement de camouflage suivant l'une des revendications 1 à 5, caractérisé en ce que la couche de base est réfléchissante sur toute la surface et la peinture est déposée, suivant des régions partielles, en une épaisseur de couches différentes.

10. Revêtement de camouflage suivant l'une des revendications 1 à 5, caractérisé en ce que l'agent liant de la peinture présente une grande absorption dans le domaine de 5,5 à 7,5 $\mu$m.